# EUROPEAN PATENT APPLICATION

(11) **EP 4 383 389 A1**
(43) Date of publication of application: **12.06.2024**
(21) Application number: 22895726.2
(22) Date of filing: 21.11.2022
(51) Int. Cl.: H01M 10/052, H01G 11/32, H01G 11/58, H01M 4/13, H01M 4/36, H01M 10/0569, H01M 10/058

(54) **NONAQUEOUS ELECTROLYTE POWER STORAGE ELEMENT, DEVICE, AND METHOD FOR PRODUCING NONAQUEOUS ELECTROLYTE POWER STORAGE ELEMENT**

(30) Priority: 22.11.2021 JP 2021189741
(71) Applicant: The School Corporation Kansai University, Suita-shi, Osaka 564-8680 (JP); GS Yuasa International Ltd., Kisshoin, Minami-ku, Kyoto-shi, Kyoto 601-8520 (JP)
(72) Inventor: HAKARI, Takashi, Suita-shi, Osaka 564-8680 (JP); ISHIKAWA, Masashi, Suita-shi, Osaka 564-8680 (JP); MURATA, Chihiro, Suita-shi, Osaka 564-8680 (JP); OKUDA, Daisuke, Suita-shi, Osaka 564-8680 (JP); OZAKI, Shinji, Suita-shi, Osaka 564-8680 (JP); HARADA, Ryo, Kyoto-shi, Kyoto 601-8520 (JP); KONDO, Atsuro, Kyoto-shi, Kyoto 601-8520 (JP); INAMASU, Tokuo, Kyoto-shi, Kyoto 601-8520 (JP)
(74) Representative: Isarpatent
(86) International application number: PCT/JP2022/043027
(87) International publication number: WO 2023/090445

(57) **Abstract**

A nonaqueous electrolyte energy storage device according to one aspect of the present invention includes: a positive electrode containing a composite of porous carbon and sulfur; and a nonaqueous electrolyte containing a nonaqueous solvent containing an unsaturated cyclic carbonate and a lithium salt, in which a cumulative 70% pore size of the porous carbon is 2.0 nm or more and 7.0 nm or less, a content of the unsaturated cyclic carbonate in the nonaqueous solvent is 10 vol% or more, and a positive electrode potential at an end-of-discharge voltage in normal use is 1.0 V vs. Li/Li⁺ or less.

## Description

### TECHNICAL FIELD

The present invention relates to a nonaqueous electrolyte energy storage device, a device, and a method for manufacturing a nonaqueous electrolyte energy storage device.

### BACKGROUND ART

Nonaqueous electrolyte secondary batteries typified by lithium ion secondary batteries are often used for electronic devices such as personal computers and communication terminals, motor vehicles, and the like since, because the batteries are high in energy density. The nonaqueous electrolyte secondary battery generally includes a pair of electrodes electrically isolated from each other by a separator, and a nonaqueous electrolyte interposed between the electrodes, and is configured to allow charge transport ions to be transferred between both the electrodes for charge-discharge. In addition, capacitors such as lithium ion capacitors and electric double layer capacitors are also widely used as nonaqueous electrolyte energy storage devices other than the nonaqueous electrolyte secondary batteries.

As nonaqueous electrolyte energy storage devices, nonaqueous electrolyte energy storage devices, such as lithium-sulfur batteries (Li-S batteries), in which sulfur is used as a positive active material are known. Sulfur is a positive active material having a large theoretical capacity, and has a high electric resistivity. For this reason, it has been attempted to form composites of sulfur and carbon materials (see Patent Document 1).

### PRIOR ART DOCUMENT

### PATENT DOCUMENT

Patent Document 1: WO 2016/009936 A

### SUMMARY OF THE INVENTION

### PROBLEMS TO BE SOLVED BY THE INVENTION

Even in a conventional nonaqueous electrolyte energy storage device in which a composite of carbon and sulfur is used for a positive electrode, a discharge capacity is not sufficiently large because a utilization factor of sulfur as a positive active material is low.

An object of the present invention is to provide a nonaqueous electrolyte energy storage device having a large discharge capacity per mass of sulfur, a device including such a nonaqueous electrolyte energy storage device, and a method for manufacturing such a nonaqueous electrolyte energy storage device.

### MEANS FOR SOLVING THE PROBLEMS

A nonaqueous electrolyte energy storage device according to one aspect of the present invention includes: a positive electrode containing a composite of porous carbon and sulfur; and a nonaqueous electrolyte containing a nonaqueous solvent containing an unsaturated cyclic carbonate and a lithium salt, in which a cumulative 70% pore size of the porous carbon is 2.0 nm or more and 7.0 nm or less, a content of the unsaturated cyclic carbonate in the nonaqueous solvent is 10 vol% or more, and a positive electrode potential at an end-of-discharge voltage in normal use is 1.0 V vs. Li/Li⁺ or less.

A device according to another aspect of the present invention includes the nonaqueous electrolyte energy storage device according to one aspect of the present invention.

A method for manufacturing a nonaqueous electrolyte energy storage device according to another aspect of the present invention includes: performing discharge on an energy storage device including a positive electrode containing a composite of porous carbon and sulfur and a nonaqueous electrolyte containing a nonaqueous solvent containing an unsaturated cyclic carbonate and a lithium salt, in which a cumulative 70% pore size of the porous carbon is 2.0 nm or more and 7.0 nm or less, a content of the unsaturated cyclic carbonate in the nonaqueous solvent is 10 vol% or more, and the discharge is performed until a positive electrode potential reaches 1.0 V vs. Li/Li⁺ or less.

### ADVANTAGES OF THE INVENTION

According to one aspect of the present invention, it is possible to provide a nonaqueous electrolyte energy storage device having a large discharge capacity per mass of sulfur, a device including such a nonaqueous electrolyte energy storage device, and a method for manufacturing such a nonaqueous electrolyte energy storage device.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus configured by assembling a plurality of nonaqueous electrolyte energy storage devices.
Fig. 3 is a diagram illustrating a discharge curve in a charge-discharge test of each nonaqueous electrolyte energy storage device of Example 2 and Comparative Example 1.

### MODE FOR CARRYING OUT THE INVENTION

First, outlines of a nonaqueous electrolyte energy storage device, a device, and a method for manufacturing the nonaqueous electrolyte energy storage device disclosed by the present specification will be described.

A nonaqueous electrolyte energy storage device according to one aspect of the present invention includes: a positive electrode containing a composite of porous carbon and sulfur; and a nonaqueous electrolyte containing a nonaqueous solvent containing an unsaturated cyclic carbonate and a lithium salt, in which a cumulative 70% pore size of the porous carbon is 2.0 nm or more and 7.0 nm or less, a content of the unsaturated cyclic carbonate in the nonaqueous solvent is 10 vol% or more, and a positive electrode potential at an end-of-discharge voltage in normal use is 1.0 V vs. Li/Li⁺ or less.

The nonaqueous electrolyte energy storage device has a large discharge capacity per mass of sulfur. Although the reason therefor is not clear, the following reason is presumed. It is considered that the unsaturated cyclic carbonate contained in the nonaqueous solvent is polymerized by mixing the nonaqueous electrolyte impregnated in the pores of the porous carbon with lithium polysulfide soluble in the nonaqueous electrolyte formed during discharge, and a film is formed in the pores. As the pore size of the porous carbon increases, a production amount of lithium polysulfide soluble in the nonaqueous electrolyte increases. Thus, it is considered that a mixing ratio of the nonaqueous electrolyte impregnated in the pores and lithium polysulfide soluble in the nonaqueous electrolyte changes depending on the pore size, and as a result, the pore size affects ion conductivity of the film to be formed. It is considered that when the pore size of the porous carbon is within a predetermined range, the mixing ratio between the nonaqueous electrolyte and the lithium polysulfide soluble in the nonaqueous electrolyte is optimized in the pores, whereby a film having high ion conductivity is formed in the pores, and a utilization factor of sulfur is improved. Since the nonaqueous electrolyte contains a sufficient amount of unsaturated cyclic carbonate, a film having a high sulfur elution suppression effect is formed on a surface of the composite. In addition, the nonaqueous electrolyte contains a sufficient amount of unsaturated cyclic carbonate, and the positive electrode potential at the end-of-discharge voltage in normal use is 1.0 V vs. Li/Li⁺ or less, thereby increasing the sulfur utilization factor. When discharge is performed until the positive electrode potential reaches 1.0 V vs. Li/Li⁺ or less, not only the discharge capacity is increased by simply performing deep discharge, but also the discharge capacity is increased by increasing the sulfur utilization factor itself. The reason why the sulfur utilization factor is increased by discharging until the positive electrode potential reaches 1.0 V vs. Li/Li⁺ or less is presumed as follows. When deep discharge is performed until the positive electrode potential reaches 1.0 V vs. Li/Li⁺+ or less, it is considered that a film is formed up to the inside of the composite, and a component (for example, a polymer of an unsaturated cyclic carbonate such as polyvinylene carbonate) of the formed film is lithiated, so that the film has good ion conductivity. According to the nonaqueous electrolyte energy storage device, it is presumed that the sulfur utilization factor is increased by forming a film having good ion conductivity in the composite as described above. From the above, it is presumed that the discharge capacity per mass of sulfur is large in the nonaqueous electrolyte energy storage device. Since the sulfur utilization factor itself is increased as described above, the discharge capacity per mass of sulfur in a potential range where the positive electrode potential is 1.0 V vs. Li/Li⁺ or more is also large. The nonaqueous electrolyte energy storage device is also high in energy density.

The "cumulative 70% pore size of porous carbon" is measured by the following method. When the porous carbon before assembling the nonaqueous electrolyte energy storage device can be provided, the above measurement is performed on the porous carbon. The measurement is performed on one obtained by subjecting the porous carbon incorporated in the positive electrode of the nonaqueous electrolyte energy storage device to treatment by the following procedure. First, the nonaqueous electrolyte energy storage device is subjected to constant current discharge at a current of 0.05 C to the end-of-discharge voltage in normal use so as to be in a discharge state. After a rest period of 30 minutes, constant current charge is performed at a current of 0.05 C to the upper limit voltage in normal use. The nonaqueous electrolyte energy storage device is disassembled to take out the positive electrode, and a test battery including a metal lithium electrode as the counter electrode is assembled and subjected to constant current charge at a current of 10 mA per 1 g of positive composite until the positive electrode potential reaches 3.0 V vs. Li/Li⁺ to adjust the positive electrode to a full charge state. The battery is disassembled again to take out the positive electrode. The nonaqueous electrolyte attached to the positive electrode taken out is thoroughly washed using dimethyl carbonate. After the washed positive electrode was dried overnight at room temperature, and the composite of the porous carbon and sulfur is collected and subjected to heat treatment at 800°C for 5 hours in an inert atmosphere to obtain porous carbon for measurement. Operations from disassembly of the nonaqueous electrolyte energy storage device to collection of the composite are performed in an argon atmosphere having a dew point of - 60°C or lower. The reason for performing the heat treatment at 800°C for 5 hours in an inert atmosphere is to remove sulfur, reaction intermediates of sulfur such as lithium polysulfide generated by charge-discharge, and a film from the composite.

The porous carbon before assembling the nonaqueous electrolyte energy storage device or the porous carbon subjected to the above-mentioned treatment is subjected to pore size distribution measurement using a nitrogen adsorption/desorption method. This measurement can be performed using "autosorb iQ" manufactured by Quantachrome Instruments. A pore volume up to a pore size of 10 nm is defined as a total pore volume, and the pore size at which a cumulative pore volume is 70% of the total pore volume is defined as the cumulative 70% pore size.

The term "in normal usage" means use of the nonaqueous electrolyte energy storage device while employing charge-discharge conditions recommended or specified for the nonaqueous electrolyte energy storage device. The discharge condition is determined by, for example, setting of a device using the nonaqueous electrolyte energy storage device.

A content of an oxygen element with respect to a carbon element, a sulfur element, the oxygen element and a fluorine element in the composite as measured by SEM-EDX analysis (scanning electron microscope-energy dispersive X-ray analysis) is preferably 20% by mass or more. Usually, when charge and discharge is performed so that the positive electrode potential reaches 1.0 V vs. Li/Li⁺ or less, a film is formed up to the inside of the composite as described above, and as a result, the content of the oxygen element in the composite increases. That is, when the content of the oxygen element is 20% by mass or more, it is considered to indicate that a film is sufficiently formed up to the inside of the composite, so that the sulfur utilization factor is further increased, and the discharge capacity per mass of sulfur is further increased.

The SEM-EDX analysis is performed on a composite collected from a positive electrode in which a nonaqueous electrolyte energy storage device is disassembled, a test battery is assembled, and the battery is adjusted to a fully charged state in the same procedure as the treatment in the measurement of the "cumulative 70% pore size of porous carbon" described above. An acceleration voltage of an electron beam is set to 15 kV, and a characteristic X-ray reflecting the inside of the particle is detected. Point analysis is performed at arbitrary four points on a particle surface of one composite. An average value of the contents of the oxygen element obtained from the contents of the carbon element, the sulfur element, the oxygen element, and the fluorine element measured at each point is adopted.

An electrostatic capacity of the positive electrode prepared using two of the positive electrodes and measured by a symmetric capacitor using a nonaqueous electrolyte solution containing lithium bis(trifluoromethanesulfonyl)imide (LiTFSI) at a content of 1.0 mol/dm³ and containing vinylene carbonate (VC) as a nonaqueous solvent is preferably 2 F/g or more. The magnitude of the electrostatic capacity of the positive electrode affects the size of the surface area that can contribute to the reaction of the composite. That is, when the electrostatic capacity of the positive electrode is 2 F/g or more, it can be said that a sufficient ion conduction path is formed up to the inside of the composite, and the discharge capacity per mass of sulfur becomes larger.

In the preparation of the symmetric capacitor, two positive electrodes obtained by disassembling two nonaqueous electrolyte energy storage devices of the same type, assembling a test battery, and adjusting the battery to a fully charged state are used in the same procedure as in the measurement of the "cumulative 70% pore size of porous carbon" described above. That is, one of the two positive electrodes taken out from the nonaqueous electrolyte energy storage device and provided is used as the positive electrode of the symmetric capacitor, and the other is used as the negative electrode of the symmetric capacitor. The electrostatic capacity is measured at a current of 0.02 mA/cm² at a temperature of 25°C. The electrostatic capacity is a value per mass of porous carbon in a positive electrode composite.

A device according to another aspect of the present invention includes the nonaqueous electrolyte energy storage device according to one aspect of the present invention.

The nonaqueous electrolyte energy storage device provided in the device has a large discharge capacity per mass of sulfur. Thus, the device can be used, for example, by reducing a frequency of charge of the nonaqueous electrolyte energy storage device.

A method for manufacturing a nonaqueous electrolyte energy storage device according to another aspect of the present invention includes: performing discharge on an energy storage device including a positive electrode containing a composite of porous carbon and sulfur and a nonaqueous electrolyte containing a nonaqueous solvent containing an unsaturated cyclic carbonate and a lithium salt, in which a cumulative 70% pore size of the porous carbon is 2.0 nm or more and 7.0 nm or less, a content of the unsaturated cyclic carbonate in the nonaqueous solvent is 10 vol% or more, and the discharge is performed until a positive electrode potential reaches 1.0 V vs. Li/Li⁺ or less.

According to the production method, a nonaqueous electrolyte energy storage device having a large discharge capacity per mass of sulfur can be produced.

A nonaqueous electrolyte energy storage device, a device, an energy storage apparatus, and a method for manufacturing a nonaqueous electrolyte energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Nonaqueous electrolyte energy storage device>

A nonaqueous electrolyte energy storage device according to an embodiment of the present invention includes an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with a separator interposed therebetween, or a wound type obtained by winding a positive electrode and a negative electrode stacked with a separator interposed therebetween. The nonaqueous electrolyte is present in a state of being contained in the positive electrode, the negative electrode, and the separator. A nonaqueous electrolyte secondary battery will be described as an example of a nonaqueous electrolyte energy storage device.

### (Positive electrode)

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Q cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The intermediate layer is a layer disposed between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer contains a composite of porous carbon and sulfur. The positive active material layer contains optional components such as a conductive agent, a binder, a thickener, a filler, or the like as necessary. The positive active material layer is usually formed from a positive composite containing a composite and other optional components.

A composite of porous carbon and sulfur includes a form in which porous carbon and sulfur are contained in one particle. The composite may include a form in which at least part of sulfur is disposed in the pore of the porous carbon. In other words, the composite may include a form in which the porous carbon is impregnated with at least part of sulfur. A film derived from a nonaqueous electrolyte is usually formed on the surface of the composite. It is preferable that the film is also formed in a void of the composite.

The porous carbon is a porous body containing a carbon element as a main constituent element. The main constituent element means an element having the highest content on a mass basis. The content of the carbon element in the porous carbon is preferably 80% by mass or more, more preferably 90% by mass or more, still more preferably 95% by mass or more. The porous carbon may be composed substantially of only a carbon element. The porous carbon may further contain other elements such as an oxygen element in addition to the carbon element.

The cumulative 70% pore size of the porous carbon is 2.0 nm or more and 7.0 nm or less, preferably 2.5 nm or more and 6.0 nm or less, more preferably 3.0 nm or more and 5.0 nm or less, still more preferably 3.4 nm or more and 4.5 nm or less. When the cumulative 70% pore size of the porous carbon is within the above range, the discharge capacity per mass of sulfur of the nonaqueous electrolyte energy storage device is large.

The content of the porous carbon in the composite (mass ratio of the porous carbon to the total mass of the composite) is preferably 10% by mass or more and 50% by mass or less, more preferably 20% by mass or more and 45% by mass or less, still more preferably 30% by mass or more and 40% by mass or less. By setting the content of the porous carbon in the composite within the above range, the discharge capacity of the nonaqueous electrolyte energy storage device can be increased.

Sulfur in the composite functions as a positive active material. Sulfur may be sulfur simple substance or a sulfur compound. That is, it is sufficient that the composite contains the sulfur element. Examples of the sulfur compound include metal sulfides such as lithium sulfide and organic sulfur compounds such as organic disulfide compounds and carbon sulfide compounds. Sulfur has advantages such as a high theoretical capacity and low cost.

The content of sulfur in the composite (mass ratio of the sulfur element to the total mass of the composite) is preferably 50% by mass or more and 90% by mass or less, more preferably 55% by mass or more and 80% by mass or less, still more preferably 60% by mass or more and 70% by mass or less. By setting the content of sulfur in the composite within the above range, the discharge capacity of the nonaqueous electrolyte energy storage device can be increased.

Main elements included in the composite are a carbon element and a sulfur element. The composite preferably contains an oxygen element, and may further contain a fluorine element. The oxygen element and the fluorine element may be elements included in a film derived from a nonaqueous electrolyte. In addition, the composite may contain a carbon element, a hydrogen element, a lithium element, and the like, and the carbon element, the hydrogen element, the lithium element, and the like may be elements included in a film derived from a nonaqueous electrolyte.

The content of the oxygen element with respect to the carbon element, the sulfur element, the oxygen element, and the fluorine element in the composite as measured by SEM-EDX analysis may be, for example, 15% by mass or more, and is preferably 20% by mass or more, and more preferably 22% by mass or more. When the content of the oxygen element is equal to or more than the above lower limit, the discharge capacity per mass of sulfur is further increased. The content of the oxygen element may be 40% by mass or less, 30% by mass or less, or 25% by mass or less. The content of the oxygen element may be within a range of equal to or more than any of the above lower limits and equal to or less than any of the above upper limits. The content of the oxygen element tends to increase as the discharge is performed up to a lower positive electrode potential.

The content of the composite in the positive active material layer is preferably 60% by mass or more and 95% by mass or less, more preferably 70% by mass or more and 90% by mass or less. By setting the content of the composite within the above range, the discharge capacity of the nonaqueous electrolyte energy storage device can be increased, and the energy density can be increased.

The positive active material layer may contain a positive active material other than sulfur included in the composite. However, the content of sulfur (sulfur element) in the entire positive active material is preferably 50% by mass or more, more preferably 70% by mass or more, still more preferably 90% by mass or more, yet still more preferably 99% by mass or more, particularly preferably 100% by mass.

The conductive agent is not particularly limited as long as the agent is a material with conductivity. This conductive agent does not include the porous carbon included in the composite. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen black. Examples of the graphene-based carbon include graphene, carbon nanotubes (CNTs), and fullerene. Examples of the form of the conductive agent include a powdery form and a fibrous form. As the conductive agent, one of these materials may be used alone, or two or more thereof may be used in mixture. In addition, these materials may be used in combination. For example, a composite material of carbon black and CNT may be used. Among them, carbon black is preferable, an in particular, acetylene black is preferable, from the viewpoint of electron conductivity and coatability.

The content of the conductive agent in the positive active material layer is preferably 1% by mass or more and 20% by mass or less, more preferably 3% by mass or more and 15% by mass or less. By setting the content of the conductive agent to the above range, the energy density of the nonaqueous electrolyte energy storage device can be enhanced.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrenebutadiene rubber (SBR), and fluororubber; and polysaccharide polymers.

The content of the binder in the positive active material layer is preferably 1% by mass or more and 10% by mass or less, more preferably 3% by mass or more and 9% by mass or less. By setting the binder content to the above range, the composite and the like can be stably held.

Examples of the thickener include polysaccharide polymers such as carboxymethylcellulose (CMC), and methylcellulose. When the thickener has a functional group that is reactive with lithium and the like, the functional group may be deactivated by methylation or the like in advance. The content of the thickener in the positive active material layer is preferably 0.5% by mass or more and 10% by mass or less, more preferably 2% by mass or more and 5% by mass or less. In an embodiment of the present invention, a thickener may not be contained in the positive active material layer.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. The content of the filler in the positive active material layer is preferably 0.1% by mass or more and 10% by mass or less. In an embodiment of the present invention, a filler may not be contained in the positive active material layer.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W as a component other than the composite, the positive active material other than sulfur, the conductive agent, the binder, the thickener, and the filler.

The electrostatic capacity of the positive electrode prepared using two positive electrodes provided in the nonaqueous electrolyte energy storage device and measured by a symmetric capacitor using a nonaqueous electrolyte solution containing LiTFSI at a content of 1.0 mol/dm³ and containing VC as a nonaqueous solvent is preferably 2 F/g or more, more preferably 2.2 F/g or more, and still more preferably 2.4 F/g or more. When the electrostatic capacity is equal to or more than the above lower limit, the discharge capacity per mass of sulfur is further increased. The electrostatic capacity may be 4 F/g or less or 3 F/g or less. The electrostatic capacity may be within a range of equal to or more than any of the above lower limits and equal to or less than any of the above upper limits. The electrostatic capacity tends to increase as the discharge is performed up to a lower positive electrode potential.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. By setting the average thickness of the negative substrate within the range mentioned above, it is possible to enhance the energy density per volume of the nonaqueous electrolyte energy storage device while increasing the strength of the negative substrate.

The negative active material layer includes a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

As the negative active material in the nonaqueous electrolyte energy storage device, a negative active material containing a lithium element such as metallic lithium or a lithium compound is usually used. Among them, metal lithium is preferable as the negative active material. Metallic lithium may be pure metallic lithium composed essentially of lithium element, or a lithium alloy containing other metal elements. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain multiple metal elements other than lithium element. Examples of the lithium compound include Li₄Ti₅O₁₂ and LiTiO₂.

The content of lithium element in the negative active material layer is preferably 80% by mass or more, more preferably 90% by mass or more, still more preferably 99% by mass or more.

The negative active material layer may be a non-porous layer (solid layer) containing a lithium element. The negative active material layer may be a porous layer including particles containing metal lithium. The negative active material layer may be a layer composed essentially of lithium element. The negative active material layer may be a pure-metallic lithium foil or a lithium alloy foil. The average thickness of the negative active material layer is preferably 5 pm or more and 1,000 pm or less, more preferably 10 pm or more and 500 pm or less, still more preferably 30 pm or more and 300 pm or less. The "average thickness" of the negative active material layer refers to the average value of thicknesses measured at arbitrary five points of the negative active material layer.

The negative active material layer may further contain a negative active material other than the negative active material containing a lithium element. However, the content of the negative active material containing a lithium element with respect to all the negative active materials contained in the negative active material layer is preferably 90% by mass or more, more preferably 99% by mass or more, and still more preferably 100% by mass.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used singly, or two or more thereof may be used in mixture. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, and means a value measured using a mercury porosimeter.

As the separator, a polymer gel containing a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used concurrently with a porous resin film, a nonwoven fabric, or the like as described above.

### (Nonaqueous electrolyte)

The nonaqueous electrolyte includes a nonaqueous solvent and a lithium salt. The nonaqueous electrolyte is usually a nonaqueous electrolyte solution.

The nonaqueous solvent contains an unsaturated cyclic carbonate. The unsaturated cyclic carbonate is a cyclic carbonate having an unsaturated bond between carbon atoms. It is considered that the unsaturated cyclic carbonate in the nonaqueous electrolyte provided in the nonaqueous electrolyte energy storage device is polymerized with discharging, and a film having a high sulfur elution effect can be formed on the surface of the composite and the like in the positive electrode. Thus, by using the nonaqueous solvent containing the unsaturated cyclic carbonate, not only the discharge capacity per mass of sulfur increases, but also a decrease in capacity associated with a charge-discharge cycle can be suppressed. The unsaturated bond between carbon atoms in the unsaturated cyclic carbonate may be present in the cyclic moiety or may be present in other moieties, and is preferably present in the cyclic moiety. The unsaturated cyclic carbonate may be one in which some or all of the hydrogen atoms are substituted with halogen atoms such as fluorine atoms. One or two or more of the unsaturated cyclic carbonates can be used.

Examples of the unsaturated cyclic carbonate include a vinylene carbonate (VC), a vinylethylene carbonate (VEC), a 1-phenylvinylene carbonate, and a 1,2-diphenylvinylene carbonate. Among these examples, VC is preferable.

The lower limit of the content of the unsaturated cyclic carbonate in the nonaqueous solvent is 10 vol%, preferably 20 vol%, more preferably 30 vol%, still more preferably 40 vol%, 50 vol%, 60 vol%, 70 vol%, 80 vol%, 90 vol%, 95 vol%, or 99 vol%. When the content of the unsaturated cyclic carbonate in the nonaqueous solvent is equal to or more than the above lower limit, the discharge capacity per mass of sulfur of the nonaqueous electrolyte energy storage device can be increased. The nonaqueous solvent may be composed substantially of only the unsaturated cyclic carbonate or may be composed of only the unsaturated cyclic carbonate.

The nonaqueous solvent may further contain a nonaqueous solvent other than the unsaturated cyclic carbonate. Examples of other nonaqueous solvents include saturated cyclic carbonates, chain carbonates, carboxylic acid esters, phosphoric acid esters, sulfonic acid esters, ethers, amides, and nitriles. Among these, the saturated cyclic carbonate is preferable.

The saturated cyclic carbonate is a cyclic carbonate having no unsaturated bond between carbon atoms. Examples of the saturated cyclic carbonate include ethylene carbonate (EC), propylene carbonate (PC), butylene carbonate (BC), chloroethylene carbonate, fluoroethylene carbonate (FEC), and difluoroethylene carbonate (DFEC).

The lower limit of the content of the cyclic carbonate (unsaturated cyclic carbonate and saturated cyclic carbonate) in the nonaqueous solvent is preferably 50 vol%, more preferably 70 vol%, still more preferably 80 vol%, 90 vol%, 95 vol%, or 99 vol%. When the content of the cyclic carbonate in the nonaqueous solvent is equal to or more than the above lower limit, the discharge capacity per mass of sulfur of the nonaqueous electrolyte energy storage device can be further increased. The nonaqueous solvent may be composed substantially of only the cyclic carbonate or may be composed of only the cyclic carbonate.

The lithium salt can be appropriately selected from known lithium salts. Examples of the lithium salt include LiPF₆, LiPO₂F₂, LiClO₄, and lithium imide salts. One or two or more of the lithium salts can be used.

The lithium salt is preferably a lithium imide salt. A lithium imide salt is meant to include not only lithium imide salts having a structure in which two carbonyl groups are bonded to a nitrogen atom, but also those having a structure in which two sulfonyl groups are bonded to a nitrogen atom and those having a structure in which two phosphonyl groups are bonded to a nitrogen atom.

Examples of the lithium imide salt include lithium sulfonylimide salts such as LiN(SO₂F)₂ (lithium bis(fluorosulfonyl)imide: LiFSI), LiN(SO₂CF₃)₂ (lithium bis(trifluoromethanesulfonyl)imide: LiTFSI), LiN(SO₂C₂F₅)₂ (lithium bis(pentafluoroethanesulfonyl)imide: LiBETI), LiN(SO₂C₄F₉)₂ (lithium bis(nonafluorobutanesulfonyl)imide), CF₃-SO₂-N-SO₂-N-SO₂CF₃Li₂, FSO₂-N-SO₂-C₄F₉Li, CF₃-SO₂-N-SO₂-CF₂-SO₂-N-SO₂-CF₃Li₂, CF₃-SO₂-N-SO₂-CF₂-SO₃Li₂, and CF₃-SO₂-N-SO₂-CF₂-SO₂-C(-SO₂CF₃)₂Li₂: and lithium phosphonylimide salts such as LiN(POF₂)₂ (lithium bis(difluorophosphonyl)imide: LiDFPI).

The lithium imide salt preferably has a fluorine atom, and specifically preferably has, for example, a fluorosulfonyl group, a difluorophosphonyl group, a fluoroalkyl group, and the like. Among the lithium imide salts, lithium sulfonylimide salts are preferable, LiTFSI and LiFSI are more preferable, and LiTFSI is still more preferable.

The content of the lithium salt in the nonaqueous electrolyte is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. The content of the lithium salt within the range mentioned above allows the ionic conductivity of the nonaqueous electrolyte to be increased.

The nonaqueous electrolyte may contain an additive in addition to the nonaqueous solvent and the lithium salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of these additives may be used alone, or two or more thereof may be used in mixture.

The content of the additive contained in the nonaqueous electrolyte is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less with respect to the total mass of the nonaqueous electrolyte. The content of the additive falls within the range mentioned, thereby making it possible to improve capacity retention performance or cycle performance after high-temperature storage, and to further improve safety.

As the nonaqueous electrolyte, a nonaqueous electrolyte solution and a solid electrolyte may be used concurrently. The solid electrolyte can be selected from arbitrary materials, which exhibit lithium ion conductivity and are solid at normal temperature (for example, from 15°C to 25°C). Examples of the solid electrolyte include sulfide solid electrolytes, oxide solid electrolytes, nitride solid electrolytes, and polymer solid electrolytes.

### (Positive electrode potential at end-of-discharge voltage in normal use, etc.)

The upper limit of the positive electrode potential at the end-of-discharge voltage in normal use in the nonaqueous electrolyte energy storage device according to an embodiment of the present invention is 1.0 V vs. Li/Li⁺, preferably 0.9 V vs. Li/Li⁺, more preferably 0.8 V vs. Li/Li⁺, still more preferably 0.7 V vs. Li/Li⁺, 0.6 V vs. Li/Li⁺, 0.5 V vs. Li/Li⁺, 0.4 V vs. Li/Li⁺, or 0.3 V vs. Li/Li⁺. By setting the positive electrode potential at the end-of-discharge voltage in normal use to be equal to or less than the above upper limit, the sulfur utilization factor is increased, and the discharge capacity per mass of sulfur is increased. Furthermore, by setting the positive electrode potential at the end-of-discharge voltage in normal use to be equal to or less than the above upper limit, the discharge capacity per mass of sulfur in the potential range where the positive electrode potential is 1.0 V vs. Li/Li⁺ or more also increases, and the energy density also tends to increase. On the other hand, the lower limit of the positive electrode potential at the end-of-discharge voltage in normal use is, for example, 0.1 V vs. Li/Li⁺, may be 0.2 V vs. Li/Li⁺, or may be 0.3 V vs. Li/Li⁺. The positive electrode potential may be within a range of equal to or more than any of the above lower limits and equal to or less than any of the above upper limits.

One embodiment of the present invention also includes a method for using a nonaqueous electrolyte energy storage device including discharging the nonaqueous electrolyte energy storage device so that the positive electrode potential reaches 1.0 V vs. Li/Li⁺ or less. According to the use method, the sulfur utilization factor is increased, and the discharge capacity per mass of sulfur of the nonaqueous electrolyte energy storage device is increased. Furthermore, according to the use method, the discharge capacity per mass of sulfur of the nonaqueous electrolyte energy storage device in the potential range where the positive electrode potential is 1.0 V vs. Li/Li⁺ or more also increases, and the energy density of the nonaqueous electrolyte energy storage device also tends to increase. In the use method, it is preferable to perform discharge until the positive electrode potential reaches a suitable range of the positive electrode potential at the end-of-discharge voltage in normal use of the nonaqueous electrolyte energy storage device.

The shape of the nonaqueous electrolyte energy storage device according to the present embodiment is not particularly limited, and examples thereof include cylindrical batteries, prismatic batteries, flat batteries, coin batteries and button batteries.

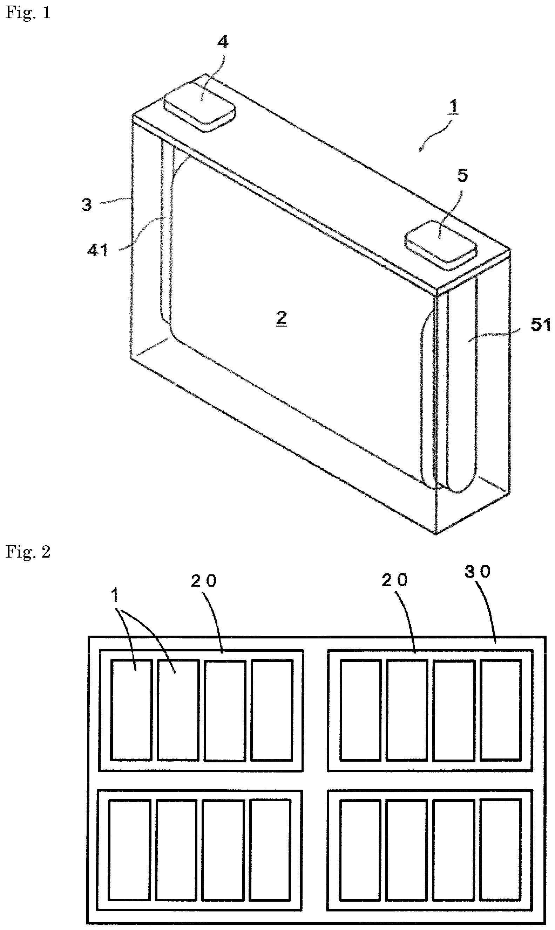

Fig. 1 illustrates a nonaqueous electrolyte energy storage device 1 as an example of prismatic batteries. Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Device>

A device according to an embodiment of the present invention includes the nonaqueous electrolyte energy storage devices according to an embodiment of the present invention described above. Examples of the device include, but are not particularly limited to, electronic devices such as personal computers and communication terminals, home electric appliances, automobiles (EVs, HEVs, PHEVs, etc.), and other industrial devices.

The device includes, for example, a charge-discharge control device configured to discharge the nonaqueous electrolyte energy storage device until the positive electrode potential reaches 1.0 V vs. Li/Li⁺ or less. For example, in this charge-discharge control device, an end voltage (end-of-discharge voltage) at the time of discharging the nonaqueous electrolyte energy storage device when using the device is set, and the positive electrode potential at the end-of-discharge voltage is 1.0 V vs. Li/Li⁺ or less. In other words, in the device, the nonaqueous electrolyte energy storage device is configured to be capable of be discharged until the positive electrode potential reaches 1.0 V vs. Li/Li⁺ or less. When the device is used, discharge may not be performed until the positive electrode potential reaches 1.0 V vs. Li/Li⁺ or less, and charge may be performed before the positive electrode potential reaches 1.0 V vs. Li/Li⁺ or less. The device is preferably configured to discharge the nonaqueous electrolyte energy storage device to a suitable range of the positive electrode potential at the end-of-discharge voltage in normal use of the nonaqueous electrolyte energy storage device according to an embodiment of the present invention described above.

Since the nonaqueous electrolyte energy storage device provided in the device has a large discharge capacity per mass of sulfur, the nonaqueous electrolyte energy storage device can be used with a reduced charge frequency, for example. In the device, the nonaqueous electrolyte energy storage device can be used at a high energy density.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as EVs, HEVs, and PHEVs, a power source for electronic devices such as personal computers and communication terminals, or a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing a nonaqueous electrolyte energy storage device according to an embodiment of the present invention includes: performing discharge on an energy storage device including a positive electrode containing a composite of porous carbon and sulfur and a nonaqueous electrolyte containing a nonaqueous solvent containing an unsaturated cyclic carbonate and a lithium salt, in which a cumulative 70% pore size of the porous carbon is 2.0 nm or more and 7.0 nm or less, a content of the unsaturated cyclic carbonate in the nonaqueous solvent is 10 vol% or more, and the discharge is performed until a positive electrode potential reaches 1.0 V vs. Li/Li⁺ or less.

In the production method, a nonaqueous electrolyte energy storage device (B) is obtained by performing predetermined discharge on a nonaqueous electrolyte energy storage device (A) including a positive electrode containing a composite of porous carbon and sulfur and a nonaqueous electrolyte containing a nonaqueous solvent containing an unsaturated cyclic carbonate and a lithium salt. A specific form of the nonaqueous electrolyte energy storage device (A) includes, in the nonaqueous electrolyte energy storage device according to an embodiment of the present invention described above, a nonaqueous electrolyte energy storage device in which a film is not formed on a composite in a positive electrode. The nonaqueous electrolyte energy storage device (A) may be, for example, an undischarged nonaqueous electrolyte energy storage device assembled using a positive electrode, a negative electrode, and a nonaqueous electrolyte. The nonaqueous electrolyte energy storage device (A) may be discharged such that the positive electrode potential does not reach 1.0 V vs. Li/Li⁺ or less. In such a case, a film may be present on the surface of the composite in the positive electrode of the nonaqueous electrolyte energy storage device (A). It is presumed that a good ion conduction path is formed up to the inside of the composite by discharging the nonaqueous electrolyte energy storage device (A) as described above until the positive electrode potential reaches 1.0 V vs. Li/Li⁺ or less. As a result, according to the manufacturing method, the nonaqueous electrolyte energy storage device (B) having a large discharge capacity is obtained.

In the nonaqueous electrolyte energy storage device (B) obtained by the manufacturing method, the discharge until the positive electrode potential reaches 1.0 V vs. Li/Li⁺ or less is performed at least once, so that the sulfur utilization factor is increased. Therefore, the nonaqueous electrolyte energy storage device (B) obtained by the manufacturing method has a large discharge capacity per mass of sulfur and a high energy density even without discharging until the positive electrode potential reaches 1.0 V vs. Li/Li⁺ or less in use.

The manufacturing method may include, for example, providing a positive electrode, providing a negative electrode, providing a nonaqueous electrolyte, assembling the nonaqueous electrolyte energy storage device (A) using the positive electrode, the negative electrode, and the nonaqueous electrolyte, and performing predetermined discharge on the nonaqueous electrolyte energy storage device (A).

Providing the positive electrode may be fabricating the positive electrode. The positive electrode can be fabricated, for example, by applying a positive composite paste to a positive substrate directly or with an intermediate layer interposed therebetween, and drying the paste. The positive composite paste contains the composite of the porous carbon and sulfur and the respective components constituting the positive composite (positive active material layer) such as a conductive agent and a binder, which are optional components. The positive composite paste may further contain a dispersion medium.

The composite of the porous carbon and sulfur can be produced by, for example, the following procedure. The porous carbon and sulfur are mixed. This mixture is heated in an inert gas atmosphere (for example, in an argon atmosphere) to a temperature equal to or higher than the melting point of sulfur (115°C) so that the molten sulfur penetrates into the pores of the carbon material. Thereafter, cooling is performed to a temperature equal to or less than the melting point of sulfur. The heating and cooling may be repeated multiple times.

Providing the negative electrode may be fabricating the negative electrode. For example, in the fabrication of the negative electrode, when the negative active material layer is composed substantially of a pure metal lithium metal foil or a lithium alloy foil, the negative electrode can be fabricated by stacking a pure metal lithium foil or a lithium alloy foil on a negative substrate directly or with an intermediate layer interposed therebetween. The negative electrode can also be fabricated by, for example, applying a negative composite paste containing a negative active material to a negative substrate directly or with an intermediate layer interposed therebetween, and performing drying. The negative composite paste contains components included in the negative composite (negative active material layer), such as a negative active material, and a conductive agent and a binder as optional components. The negative composite paste may further contain a dispersion medium.

Providing the nonaqueous electrolyte may be preparing a nonaqueous electrolyte. The nonaqueous electrolyte can be prepared, for example, by mixing components such as an unsaturated cyclic carbonate and a lithium salt.

Assembling the nonaqueous electrolyte energy storage device (A) using the positive electrode, the negative electrode, and the nonaqueous electrolyte can be performed by a conventionally known procedure. For example, the assembling is performed by, for example, stacking or winding the positive electrode and the negative electrode with the separator interposed therebetween to form alternately superposed electrode assemblies, housing the electrode assemblies in a container, and injecting a nonaqueous electrolyte into the container.

In performing predetermined discharge on the nonaqueous electrolyte energy storage device (A), discharge is performed until the positive electrode potential reaches 1.0 V vs. Li/Li⁺ or less. At this time, it is preferable to perform discharge until the positive electrode potential reaches a suitable range of the positive electrode potential at the end-of-discharge voltage in normal use of the nonaqueous electrolyte energy storage device according to an embodiment of the present invention described above. After such discharge is performed, for example, the nonaqueous electrolyte may be replaced with another nonaqueous electrolyte.

### <Other embodiments>

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

In the above embodiment, a case where the nonaqueous electrolyte energy storage device is used as a nonaqueous electrolyte secondary battery (lithium-sulfur battery) that is chargeable and dischargeable has been mainly described, but the type, shape, dimensions, capacity, and the like of the nonaqueous electrolyte energy storage device are arbitrary. The present invention can also be applied to various secondary batteries, and capacitors such as electric double layer capacitors and lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

### EXAMPLES

Hereinafter, the present invention will be described in more detail with reference to examples, but the present invention is not limited to the following examples.

### [Example 1]

### (Fabrication of positive electrode)

The porous carbon and sulfur were mixed at a mass ratio of 35: 65. The mixture was placed in an electric furnace. In the air, the temperature was raised to 155°C, held for 6 hours, and then allowed to cool to room temperature to prepare a composite. When the cumulative 70% pore size of the porous carbon used was measured based on the pore size distribution measurement using the nitrogen adsorption/desorption method described above, it was 3.8 nm. For the other porous carbons used, the cumulative 70% pore size was measured similarly.

A positive composite paste containing water as a dispersion medium, and containing the composite obtained above, acetylene black as a conductive agent, CMC as a thickener, and SBR as a binder at a mass ratio of 90 : 5 : 3 : 2 was prepared. The positive composite paste was applied to an aluminum positive substrate and dried to fabricate a positive electrode.

### (Provision of negative electrode)

A sheet-shaped pure metallic lithium was provided as a negative electrode.

### (Preparation of nonaqueous electrolyte)

Lithium bis(trifluoromethanesulfonyl)imide (LiTFSI) was dissolved in vinylene carbonate (VC) as a nonaqueous solvent at a concentration of 1.0 mol/dm³ to prepare a nonaqueous electrolyte.

### (Assembly of nonaqueous electrolyte energy storage device and initial discharge)

As a separator, a polyethylene microporous membrane was prepared. An undischarged nonaqueous electrolyte energy storage device was assembled using the positive electrode, the negative electrode, the separator, and the nonaqueous electrolyte. The nonaqueous electrolyte energy storage device in an undischarged state was subjected to initial (first) discharge at 25°C with an end-of-discharge voltage of 0.3 V and a discharge current of 0.1 C to obtain a nonaqueous electrolyte energy storage device of Example 1. A voltage between the positive and negative electrodes in the obtained nonaqueous electrolyte energy storage device in the undischarged state and the nonaqueous electrolyte energy storage device obtained through the initial discharge can be regarded as being substantially equal to the positive electrode potential with respect to an oxidation-reduction potential of metallic lithium.

### [Examples 2 to 8 and Comparative Examples 1 to 13]

Nonaqueous electrolyte energy storage devices of Examples 2 to 8 and Comparative Examples 1 to 13 were obtained similarly to Example 1 except that porous carbon having a cumulative 70% pore size described in Table 1 was used, a nonaqueous solvent having a composition described in Table 1 was used, and initial discharge was performed at an end-of-discharge voltage described in Table 1.

### [Example 9]

A nonaqueous electrolyte energy storage device in the undischarged state was assembled in the same procedure as in Example 2, and initially discharged, and then the nonaqueous electrolyte was replaced with a solution obtained by dissolving LiTFSI at a concentration of 1.0 mol/dm³ in a mixed solvent obtained by mixing ethylene carbonate (EC) and dimethyl carbonate (DMC) at a volume ratio of 50: 50 to obtain a nonaqueous electrolyte energy storage device of Example 9.

### [Evaluation]

### (Charge-discharge test)

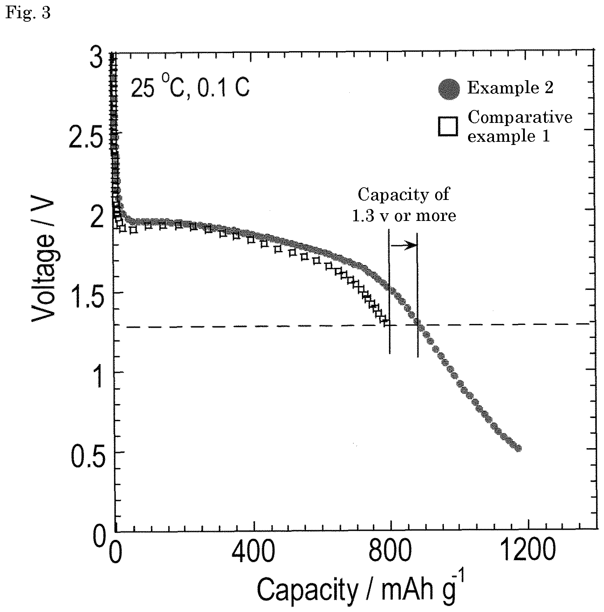

The obtained nonaqueous electrolyte energy storage devices of Examples 1 to 3 and Comparative Examples 1 to 11 were subjected to constant current charge at 25 °C to 3.0 V at 0.1 C as initial charge. Thereafter, as the second discharge, constant current discharge at 0.1 C was performed at 25°C up to the end-of-discharge voltage described in Table 1. The obtained nonaqueous electrolyte energy storage devices of Examples 4 to 9 and Comparative Examples 12 and 13 were subjected to constant current charge at 25°C to 3.0 V at 0.1 C as initial charge, and then constant voltage charge was performed at 3.0 V until the charge current reached 0.01 C. Thereafter, as the second discharge, constant current discharge at 0.1 C was performed at 25°C up to the end-of-discharge voltage described in Table 1. The discharge capacity per mass of sulfur was determined from the discharge capacity of the second discharge. The results are shown in Table 1. Fig. 3 illustrates a discharge curve in a charge-discharge test of each nonaqueous electrolyte energy storage device of Example 2 and Comparative Example 1.

Based on the second discharge, the discharge capacity per mass of sulfur in a voltage range of 1.0 V or more and the sulfur utilization factor in the voltage range of 1.0 V or more were determined. In calculating the sulfur utilization rate, the theoretical capacity of sulfur was set to 1674 mAh/g. The results are shown in Table 1.

### [SEM-EDX analysis]

For each of the nonaqueous electrolyte energy storage devices of Example 2 and Comparative Example 1, a composite of the positive electrode was collected by the method described above, and subjected to SEM-EDX analysis to determine the content of oxygen element with respect to carbon element, sulfur element, oxygen element, and fluorine element.

In the composite of the nonaqueous electrolyte energy storage device of Comparative Example 1 having an end-of-discharge voltage of 1.3 V, the content of the oxygen element was 17% by mass. On the other hand, in the composite of the nonaqueous electrolyte energy storage device of Example 2 having an end-of-discharge voltage of 0.5 V, the content of the oxygen element was 23% by mass.

### [Measurement of electrostatic capacity]

Two each of the nonaqueous electrolyte energy storage devices of Examples 2 and 3 and Comparative Example 1 was separately prepared. Using two nonaqueous electrolyte energy storage devices, a positive electrode was provided by the method described above, a symmetric capacitor was prepared, and the electrostatic capacity of the positive electrode was measured.

The electrostatic capacity of the positive electrode of the nonaqueous electrolyte energy storage device of Comparative Example 1 where the end-of-discharge voltage was 1.3 V was 0.99 F/g. On the other hand, the electrostatic capacity of the positive electrode of the nonaqueous electrolyte energy storage device of Example 3 at an end-of-discharge voltage of 0.8 V was 2.3 F/g, and the electrostatic capacity of the positive electrode of the nonaqueous electrolyte energy storage device of Example 2 at an end-of-discharge voltage of 0.5 V was 2.5 F/g.

**[Table 1]**

| | Porous carbon cumulative 70% pore size / nm | Nonaqueous solvent | Initial end-of-discharge voltage / [V] | Charge-discharge test | | | |
|---|---|---|---|---|---|---|---|
| | | | | End-of-discharge voltage / [V] | Discharge capacity / mAh g-1 | Discharge capacity in range of 1 V or more / mAh g-1 | Sulfur utilization factor in range of 1 V or more /% |
| Example 1 | 3.8 | VC | 0.3 | 0.3 | 1331 | 1004 | 60.0 |
| Example 2 | 3.8 | VC | 0.5 | 0.5 | 1164 | 977 | 58.4 |
| Example 3 | 3.8 | VC | 0.8 | 0.8 | 1050 | 963 | 57.5 |
| Comparative Example 1 | 3.8 | VC | 1.3 | 1.3 | 792 | 792 | 47.3 |
| Comparative Example 2 | 1.9 | VC | 0.3 | 0.3 | 837 | 569 | 34.0 |
| Comparative Example 3 | 1.9 | VC | 0.5 | 0.5 | 743 | 583 | 34.8 |
| Comparative Example 4 | 1.9 | VC | 0.8 | 0.8 | 630 | 569 | 34.0 |
| Comparative Example 5 | 1.9 | VC | 1.0 | 1.0 | 576 | 569 | 34.0 |
| Comparative Example 6 | 1.9 | VC | 1.3 | 1.3 | 438 | 438 | 26.2 |
| Comparative Example 7 | 7.1 | VC | 0.3 | 0.3 | 743 | 275 | 16.4 |
| Comparative Example 8 | 7.1 | VC | 0.5 | 0.5 | 476 | 235 | 14.0 |
| Comparative Example 9 | 7.1 | VC | 0.8 | 0.8 | 282 | 189 | 11.3 |
| Comparative Example 10 | 7.1 | VC | 1.0 | 1.0 | 129 | 129 | 7.7 |
| Comparative Example 11 | 7.1 | VC | 1.3 | 1.3 | 11 | 11 | 0.7 |
| Example 4 | 3.8 | VC:EC=100:0 vol% | 0.5 | 0.5 | 1320 | 1092 | 65.2 |
| Example 5 | 3.8 | VC:EC=70:30 vol% | 0.5 | 0.5 | 1236 | 1064 | 63.6 |
| Example 6 | 3.8 | VC:EC=50:50 vol% | 0.5 | 0.5 | 1159 | 1014 | 60.6 |
| Example 7 | 3.8 | VC:EC=30:70 vol% | 0.5 | 0.5 | 1081 | 941 | 56.2 |
| Example 8 | 3.8 | VC:EC=10:90 vol% | 0.5 | 0.5 | 977 | 837 | 50.0 |
| Comparative Example 12 | 3.8 | VC:EC= 5:95 vol% | 0.5 | 0.5 | 736 | 610 | 36.4 |
| Comparative Example 13 | 3.8 | VC:EC=0:100 vol% | 0.5 | 0.5 | 206 | 123 | 7.3 |
| Example 9 | 3.8 | Initial VC charge-discharge test EC:DMC=50:50 vol% | 0.5 | 0.5 | 1288 | 1132 | 67.6 |

As shown in Table 1, each of the nonaqueous electrolyte energy storage devices of Examples 1 to 9 had a large discharge capacity in which the discharge capacity per mass of sulfur was 900 mAh/g or more. In each of these nonaqueous electrolyte energy storage devices, the discharge capacity per mass of sulfur in the voltage range of 1.0 V or more is also large, and the sulfur utilization factor is high; therefore, it can be seen that in each of the nonaqueous electrolyte energy storage devices of Examples 1 to 9, the discharge capacity is larger than the addition of the amount of electricity discharged in the range of 1.0 V or less. From the discharge curves in the charge-discharge test of the nonaqueous electrolyte energy storage devices of Example 2 and Comparative Example 1 in Fig. 3, it can be confirmed that the nonaqueous electrolyte energy storage device of Example 2 has a large discharge capacity in the same voltage range (voltage range of 1.3 V or more) and a high sulfur utilization factor.

In the nonaqueous electrolyte energy storage device of Example 9, the discharge capacity per mass of sulfur obtained from the second discharge capacity was sufficiently large; whoever, it was confirmed that when the charge-discharge cycle was repeated, the discharge capacity was remarkably lowered as compared with the nonaqueous electrolyte energy storage devices of other Examples. It is found that by using a nonaqueous solvent having an unsaturated cyclic carbonate content of 10 vol% or more, a decrease in capacity of the nonaqueous electrolyte energy storage device due to a charge-discharge cycle can also be suppressed.

From the second discharge capacity in the charge-discharge test, the energy density per mass of sulfur in each of the nonaqueous electrolyte energy storage devices of Example 2 and Comparative Example 1 was determined. The nonaqueous electrolyte energy storage device of Example 2 had an energy density per mass of sulfur of 1830 Wh/kg, and the nonaqueous electrolyte energy storage device of Comparative Example 1 had an energy density per mass of sulfur of 1403 Wh/kg. Even when the end-of-discharge voltage was reduced, the energy density was increased.

### INDUSTRIAL APPLICABILITY

The present invention can be applied to a nonaqueous electrolyte energy storage device used as a power source for electronic devices such as personal computers and communication terminals, motor vehicles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode containing a composite of porous carbon and sulfur; and
a nonaqueous electrolyte containing a nonaqueous solvent containing an unsaturated cyclic carbonate and a lithium salt,
wherein a cumulative 70% pore size of the porous carbon is 2.0 nm or more and 7.0 nm or less,
a content of the unsaturated cyclic carbonate in the nonaqueous solvent is 10 vol% or more, and
a positive electrode potential at an end-of-discharge voltage in normal use is 1.0 V vs. Li/Li⁺ or less.

2. The nonaqueous electrolyte energy storage device according to claim 1, wherein a content of an oxygen element with respect to a carbon element, a sulfur element, the oxygen element and a fluorine element in the composite as measured by SEM-EDX analysis is 20% by mass or more.

3. The nonaqueous electrolyte energy storage device according to claim 1 or 2, wherein an electrostatic capacity of the positive electrode prepared using two of the positive electrodes and measured by a symmetric capacitor using a nonaqueous electrolyte solution containing lithium bis(trifluoromethanesulfonyl)imide at a content of 1.0 mol/dm³ and containing vinylene carbonate as a nonaqueous solvent is 2 F/g or more.

4. A device comprising the nonaqueous electrolyte energy storage device according to claim 1, 2 or 3.

5. A method for manufacturing a nonaqueous electrolyte energy storage device, the method comprising performing discharge on an energy storage device including a positive electrode containing a composite of porous carbon and sulfur and a nonaqueous electrolyte containing a nonaqueous solvent containing an unsaturated cyclic carbonate and a lithium salt,
wherein a cumulative 70% pore size of the porous carbon is 2.0 nm or more and 7.0 nm or less,
a content of the unsaturated cyclic carbonate in the nonaqueous solvent is 10 vol% or more, and
the discharge is performed until a positive electrode potential reaches 1.0 V vs. Li/Li⁺ or less.
